# EUROPEAN PATENT SPECIFICATION

(11) **EP 4 016 406 B1**
(45) Date of publication and mention of the grant of the patent: **01.07.2026**
(21) Application number: 20864375.9
(22) Date of filing: 06.08.2020
(51) Int. Cl.: G06Q 10/20, G06Q 50/40, B60C 11/24, B64C 25/36, B64F 5/60

(54) **TIRE MANAGEMENT APPARATUS, TIRE MANAGEMENT METHOD, AND TIRE MANAGEMENT PROGRAM**
REIFENVERWALTUNGSVORRICHTUNG, REIFENVERWALTUNGSVERFAHREN UND REIFENVERWALTUNGSPROGRAMM
DISPOSITIF DE GESTION DE PNEU, PROCÉDÉ DE GESTION DE PNEU ET PROGRAMME DE GESTION DE PNEU

(30) Priority: 19.09.2019 JP 2019170316
(43) Date of publication of application: 22.06.2022
(73) Proprietor: BRIDGESTONE CORPORATION, Chuo-ku Tokyo 104-8340 (JP)
(72) Inventor: TODA, Hayato, Tokyo 104-8340 (JP)
(74) Representative: Marks & Clerk LLP
(86) International application number: PCT/JP2020/030124
(87) International publication number: WO 2021/053991

(56) References cited:
- EP-A1- 3 726 194
- WO-A1-2016/071993
- WO-A1-2019/116782
- JP-A- 2002 171 800
- JP-A- 2002 245 125
- JP-A- 2017 156 295
- JP-A- 2019 105 599
- US-A1- 2011 153 459
- US-A1- 2019 084 355

## Description

### TECHNICAL FIELD

The present invention relates to a tire management apparatus, a tire management method, and a tire management program.

### BACKGROUND ART

A technique is known that estimates the amount of abrasion of aircraft tires (Patent Literature 1). The method disclosed in Patent Literature 1 acquires plural kinds of abrasion energy corresponding to plural running states (such as a touching-down state, a deceleration state after touching down, and a taxiing state) classified depending on the conditions of use, and estimates the amount of abrasion of the respective aircraft tires based on the acquired abrasion energy. Attention is also drawn to the disclosures of WO2019/116782A1, US2019/084355A1 and US2011/153459A1.

### CITATION LIST

### PATENT LITERATURE

Patent Literature 1: Japanese Unexamined Patent Application Publication No. 2013-113724

### SUMMARY OF INVENTION

### TECHNICAL PROBLEM

The aircraft tires are replaced when the amount of abrasion reaches a predetermined value. A delay in replacing operation or an insufficiency of the number of the aircraft tires in the stock may be caused if a certain number of tires or greater are replaced simultaneously at the same replacement time. To deal with such a problem, appropriate planning is required for the replacing operation by recognizing the replacement time. The problem described above is not limited to be applied to the aircraft tires, and is also applied to any tires attached to vehicles such as automobiles, trucks, and buses.

To solve the conventional problems described above, the present invention provides a tire management apparatus, a tire management method, and a tire management program contributing to planning for replacing operation by recognizing a replacement time of tires.

### TECHNICAL SOLUTION

A tire management apparatus according to the present invention is provided as claimed in claim 1, a corresponding tire management method in claim 6 and a corresponding non-transitory computer-readable storage medium in claim 7.

### ADVANTAGEOUS EFFECTS

The present invention can contribute to the planning for the operation of replacing tires that is commonly a non-planning operation.

### BRIEF DESCRIPTION OF DRAWINGS

[Fig. 1A] Fig. 1A is a schematic diagram showing the entire system of a tire management apparatus according to an embodiment of the present invention.
[Fig. 1B] Fig. 1B is a schematic diagram showing the tire management apparatus according to the embodiment of the present invention.
[Fig. 2] Fig. 2 is a view for explaining an example of a method of calculating a replacement time of aircraft tires according to the embodiment of the present invention.
[Fig. 3] Fig. 3 is a view for explaining the replacement time of the aircraft ties according to the embodiment of the present invention.
[Fig. 4A] Fig. 4A is a view for explaining an example of a proposal for a change of the replacement time of the aircraft tires according to the embodiment of the present invention.
[Fig. 4B] Fig. 4B is a view for explaining an example of the proposal for the change of the replacement time of the aircraft tires according to the embodiment of the present invention.
[Fig. 5] Fig. 5 is a flowchart for explaining an example of operation of the tire management apparatus according to the embodiment of the present invention.
[Fig. 6A] Fig. 6A is a view for explaining an example of a proposal for a change of the replacement time of the aircraft tires according to another embodiment of the present invention.
[Fig. 6B] Fig. 6B is a view for explaining an example of the proposal for the change of the replacement time of the aircraft tires according to the other embodiment of the present invention.

### DESCRIPTION OF EMBODIMENTS

Hereinafter, some embodiments according to the present invention are described with reference to the drawings. The same elements illustrated in the drawings are denoted by the same reference numerals, and overlapping explanations are not made below.

### 1. Configuration Example of Tire Management System

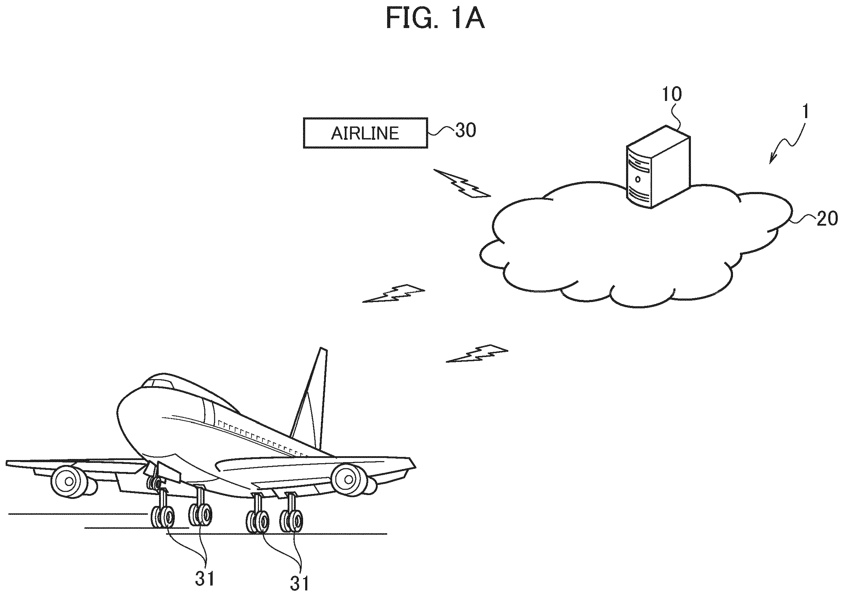

An example of a configuration of a tire management system 1 is described below with reference to Fig. 1A. The tire management system 1 includes a tire management apparatus 10 and an airline 30, as illustrated in Fig. 1A.

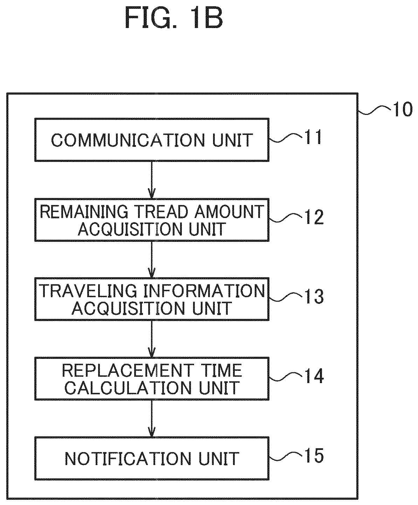

The tire management apparatus 10 is a general-purpose computer, for example, which includes a processor including a CPU and a memory including a read-only memory (ROM) and a random-access memory (RAM). The CPU reads out a program stored in the ROM to the RAM and executes the program. The tire management apparatus 10 may be either a built-in terminal device or a mobile terminal device easy to carry (such as a smartphone). The tire management apparatus 10 may also be a server. The tire management apparatus 10 manages tires attached to a plurality of moving objects. As illustrated in Fig. 1B, the tire management apparatus 10 includes a communication unit 11, a remaining tread amount acquisition unit 12, a traveling information acquisition unit 13, a replacement time calculation unit 14, and a notification unit 15.

The present embodiment is illustrated below with a case in which the tires managed by the tire management system 1 are aircraft tires 31 attached to a plurality of aircrafts, but the tires managed by the tire management system 1 are not limited to the aircraft tires 31. In other words, the moving objects to which the tires managed by the tire management system 1 are attached are not limited to aircrafts. The moving objects to which the tires managed by the tire management system 1 may be any of automobiles, trucks (including off-road dump trucks), and buses, for example. The term "aircraft" can be simply referred to below as a "plane".

The communication unit 11 is an interface connected to a network 20 to communicate with the airline 30 so as to send/receive data therebetween. The communication unit 11 acquires various kinds of pieces of information from the airline 30 via the network 20. The remaining tread amount acquisition unit 12 acquires the remaining tread amount of the aircraft tires 31 by use of the information acquired from the airline 30. The traveling information acquisition unit 13 acquires traveling information of an aircraft to which the aircraft tires 31 are attached from the airline 30. The traveling information of the aircraft includes a flight schedule of the aircraft. The replacement time calculation unit 14 calculates a replacement time of the aircraft tires 31 in accordance with the remaining tread amount acquired by the remaining tread amount acquisition unit 12 and the traveling information acquired by the traveling information acquisition unit 13. The notification unit 15 notifies a particular notification target of information on the number of the aircraft tires 31 to be replaced at the replacement time calculated by the replacement time calculation unit 14 when the number exceeds a threshold. The particular notification target in the present embodiment is illustrated with the airline 30, but is not limited to this case. For example, the particular notification target may be a company that provides maintenance repair overhaul (MRO) service. The company provides the MRO service including repair, inspection, and maintenance of aircraft tires and wheels. The particular notification target may include the airline 30 and the company that provides the MRO service. When the particular notification target includes the airline 30 and the company that provides the MRO service, the tire management apparatus 10, the airline 30, and the company that provides the MRO service are connected to each other via the network 20.

The notification unit 15 also has a proposal function that proposes, to the particular notification target, a change of the replacement time of the aircraft tires 31 when the number exceeds the threshold.

The network 20 is a communications network capable of sending/receiving various kinds of information. For example, the network 20 is implemented by various types of communication lines installed by telecommunications carriers, such as dedicated lines, public switched telephone networks, satellite communication lines, and mobile communication lines.

The communication unit 11, the remaining tread amount acquisition unit 12, the traveling information acquisition unit 13, the replacement time calculation unit 14, and the notification unit 15 each can be fabricated by single or plural processing circuits. The respective processing circuits include a programmed processing device, such as a processing device including an electric circuit. The respective processing circuits also include an application-specific integrated circuit (ASIC) configured to execute the functions described herein and a device including circuit components.

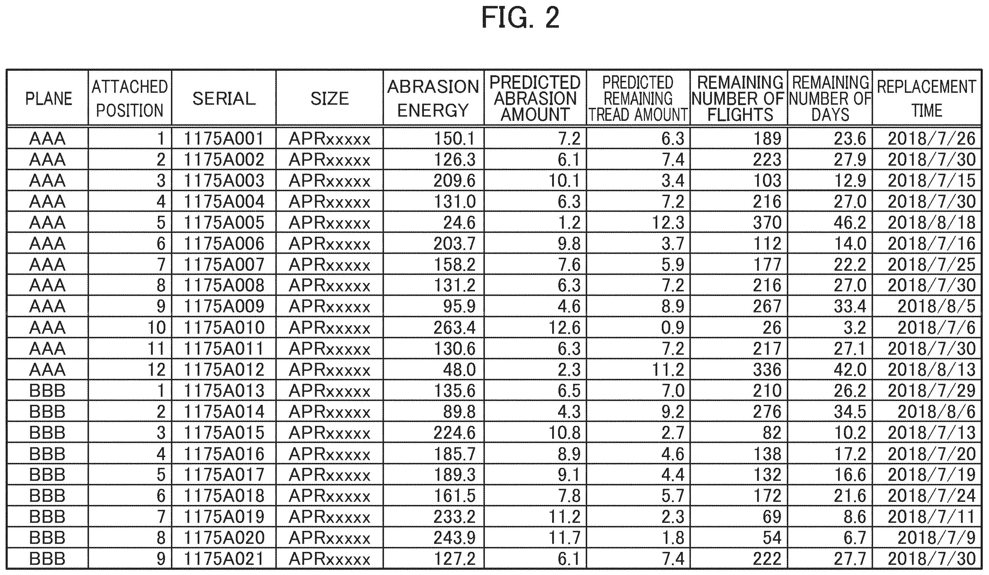

An example of a method of calculating the replacement time of the aircraft tires is described below with reference to Fig. 2.

As shown in Fig. 2, an aircraft tire with a serial number of 1175A001 is attached at a position 1 of a plane AAA. The term "abrasion energy" shown in Fig. 2 refers to abrasion energy accumulated at the corresponding aircraft tire during the past traveling. The abrasion energy is acquired by the tire management apparatus 10.

As shown in Fig. 2, the tire management apparatus 10 predicts the amount of abrasion of the aircraft tires based on the abrasion energy. The conventional technique (disclosed in JP 2013-113724, for example) may be applied to the method of predicting the amount of abrasion of the aircraft tires based on the abrasion energy. Alternatively, the management apparatus 10 may predict the amount of abrasion of the aircraft tires according to an internal pressure of the aircraft tires actually used, a load applied to the aircraft tires, a velocity of the aircraft, a slip angle caused in the aircraft tires, and a braking force of the aircraft, for example. The remaining tread amount acquisition unit 12 acquires the remaining tread amount of the aircraft tires by use of the remaining tread amount of new aircraft tires and the predicted remaining tread amount. For example, when the remaining tread amount of the aircraft tire attached at the position 1 of the plane AAA is 7.2 mm, the remaining tread amount is 6.3 mm. The remaining tread amount of the new aircraft tires is 13.5 mm. Namely, the remaining tread amount acquisition unit 12 subtracts the predicted remaining tread amount from the remaining tread amount of the new aircraft tires so as to calculate the remaining tread amount.

Since the abrasion energy per flight has been confirmed, the remaining number of usage of the respective aircraft tires (can be referred to below as a "remaining number of flights") can be calculated. The traveling information acquisition unit 13 acquires the flight schedule of the plane AAA from the airline 30. The traveling information acquisition unit 13 uses the flight schedule, so as to calculate the number of days by which the remaining tread amount of the respective aircraft tires reaches a predetermined value or smaller (can be simply referred to below as a "remaining number of days").

The aircraft tires are replaced when the remaining tread amount reaches the predetermined value or smaller. As described above, the tire management apparatus 10 can calculate the remaining number of days. The tire management apparatus 10 thus can calculate the date on which the aircraft tires are replaced (can be referred to below as a "replacement date").

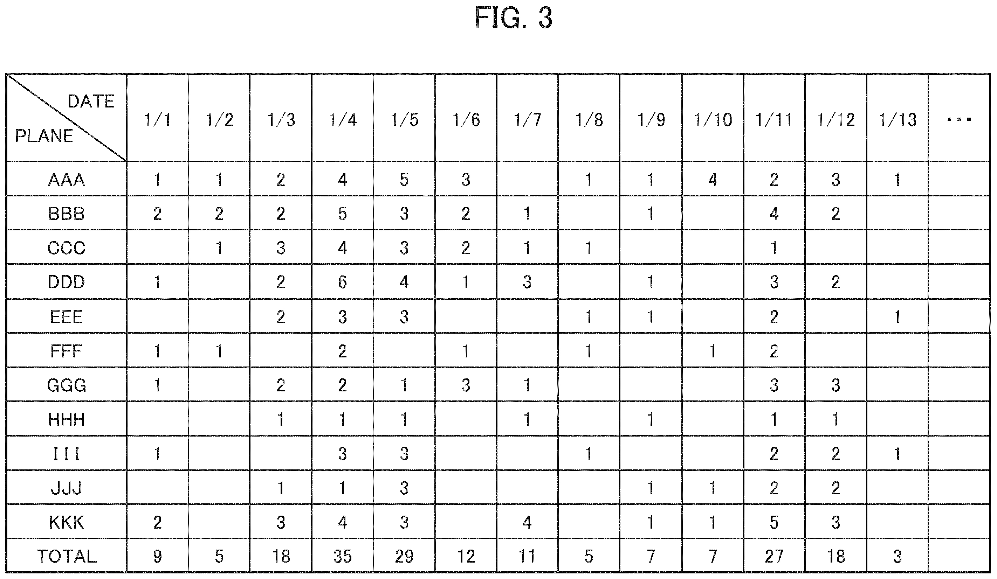

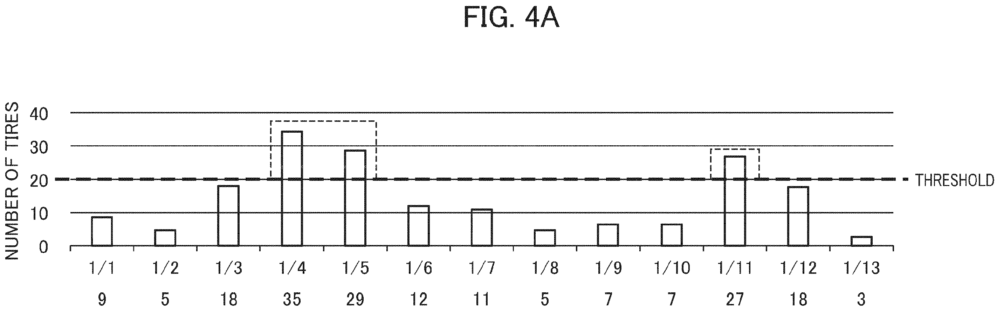

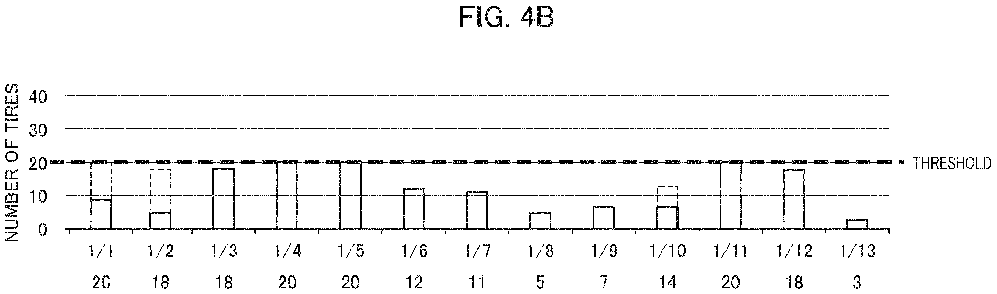

Next, a notification of the replacement time (the replacement date) and a proposal for a change of the replacement time of the aircraft tires are described below with reference to Fig. 3, Fig. 4A, and Fig. 4B. The method shown in Fig. 3, Fig. 4A, and Fig. 4B are an example.

As shown in Fig. 3, one of the aircraft tires attached to the plane AAA is replaced on January 1. Similarly, two of the aircraft tires attached to the plane BBB are replaced on January 1. As shown in Fig. 3, the number of the aircraft tires to be replaced on January 1 is nine in total. Similarly, the number of the aircraft tires to be replaced on January 2 is five in total.

A delay in replacing operation may be caused if a predetermined number of aircraft tires or greater needs to be replaced simultaneously at the same replacement time. A case is presumed below in which the number of the aircraft tires (threshold) determined to be replaced smoothly is 20. In such a case, a delay in the replacing operation could be caused on January 4 (35 aircraft tires), on January 5 (29 aircraft tires), and on January 11 (27 aircraft tires). There is sufficient time enough to execute the replacing operation on the other days since the number of the aircraft tires to be replaced is the threshold (20 aircraft tires) or less.

The notification unit 15 in the present embodiment, when the number of the aircraft tires to be replaced at a specific replacement time exceeds the threshold, notifies the airline 30 of this information. This enables the planning for the operation of replacing the aircraft tires that is commonly a non-planning operation. This operation further enables a preparation of new aircraft tires for the replacement during the flight of the corresponding aircraft, for example, so as to allot resources including operators and equipment to appropriate locations.

While the notification unit 15 in the present embodiment notifies the airline 30 of the replacement time per aircraft tire regardless of whether the number of the aircraft tires to be replaced exceeds the threshold, together with alert particularly regarding at least either (may be both of) the specific replacement time when exceeding the threshold or (and) the aircraft tires required to be replaced at the specific replacement time when exceeding the threshold, but the present embodiment is not limited to this case. For example, the notification unit 15 may only notify the airline 30 of at least either (or both of) the specific replacement time when exceeding the threshold or (and) the aircraft tires required to be replaced at the specific replacement time when exceeding the threshold.

The notification unit 15 in the present embodiment may propose the change of the replacement time of the aircraft tires to the airline 30. For example, the notification unit 15 can propose the acceleration of the replacement time of the aircraft tires to the airline 30. A case is presumed below in which the number of the aircraft tires exceeding the threshold on January 4 is 15, and the number of the aircraft tires exceeding the threshold on January 5 is 9. As shown in Fig. 4B, the notification unit 15 proposes that the replacement time of the aircraft tires exceeding the threshold (24 aircraft tires in total) is to move forward to execute the replacement on January 2 and January 3. Similarly, as shown in Fig. 4A, the number of the aircraft tires exceeding the threshold on January 11 is 7. As shown in Fig. 4B, the notification unit 15 proposes that the replacement time of the aircraft tires exceeding the threshold (7 aircraft tires) is to move forward to execute the replacement on January 10. This adjustment can lead the number of the aircraft tires replaced on each day to be the threshold or smaller, so as to avoid the concentration of the aircraft tires to be replaced on a specific replacement time, leading to a smooth replacement operation accordingly. While the present embodiment is illustrated above with the case in which the threshold corresponds to the number of the aircraft tire to be replaced smoothly, the threshold is not limited to this case, and may correspond to the information regarding the stock of the aircraft tires at the replacement time. The information regarding the stock of the aircraft tires includes the remaining number of the aircraft tires in the stock and the value in which a predetermined margin is added to the remaining number of the aircraft tires in the stock. Namely, the threshold in the present embodiment may be set in accordance with the remaining number of the aircraft tires in the stock or the value in which a predetermined margin is added to the remaining number of the aircraft tires in the stock.

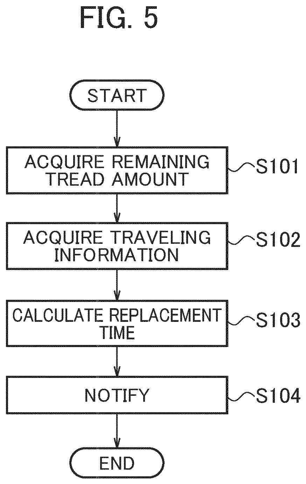

Next, an example of operation of the tire management apparatus 10 is described below with reference to Fig. 5.

In step S101, the tire management apparatus 10 acquires the abrasion energy of the aircraft tires, and predicts the abrasion amount of the aircraft tires based on the abrasion energy. The tire management apparatus 10 acquires the remaining tread amount of the aircraft tires by use of the predicted abrasion amount.

The process proceeds to step S102, and the tire management apparatus 10 acquires the flight schedule of the aircraft from the airline 30. The process proceeds to step S103, and the tire management apparatus 10 calculates the replacement time of the aircraft tires in accordance with the abrasion amount and the flight schedule. The process proceeds to step S104, and the tire management apparatus 10 notifies, when the number of the aircraft tires to be replaced at the replacement time exceeds the threshold, the particular notification target of the specific replacement time when exceeding the threshold and/or the aircraft tires required to be replaced at the specific replacement time. The tire management apparatus 10 notifies, regardless of whether the number of the aircraft tires to be replaced exceeds the threshold, the particular notification target of the information particularly together with the alert regarding the specific replacement time when exceeding the threshold and/or the aircraft tires required to be replaced at the specific replacement time when exceeding the threshold.

### 2. operational Effects

The operational effects of the tire management apparatus 10 are described below.

The tire management apparatus 10 notifies the particular notification target (such as the airline 30) of the information on the number of the aircraft tires to be replaced at the replacement time when the number exceeds the threshold. This enables the planning for the operation of replacing the aircraft tires that is commonly a non-planning operation. This operation further enables the preparation of the new aircraft tires for replacement during the flight of the corresponding aircraft, for example, so as to allot the resources including operators and equipment to appropriate locations.

The threshold is the information on the remaining number of the aircraft tires in the stock at the replacement time, for example. Setting such a threshold can allow the planning for the operation of replacing the aircraft tires.

The tire management apparatus 10 may propose, to the particular notification target, the change of the replacement time of the aircraft tires when exceeding the threshold. As shown in Fig. 4B, since the number of the aircraft tires to be replaced is led to be the threshold or less, the concentration of the aircraft tires to be replaced on a specific replacement time can be avoided, leading to a smooth replacement operation accordingly.

The tire management apparatus 10 may propose the acceleration of the replacement time of the aircraft tires upon the change of the replacement time. This can avoid the concentration of the aircraft tires to be replaced on a specific replacement time, so as to execute the replacement operation smoothly.

The tire management apparatus 10 calculates the remaining tread amount of the aircraft tires according to the remaining tread amount of new aircraft tires and the predicted abrasion amount. The tire management apparatus 10 calculates the replacement time in accordance with the remaining tread amount calculated as described above and the traveling information. This improves the accuracy of calculating the replacement time accordingly.

The tire management apparatus 10 also calculates the remaining number of flights that the corresponding aircraft can take in accordance with the remaining tread amount. The tire management apparatus 10 acquires the flight schedule of the corresponding aircraft from the airline 30. The tire management apparatus 10 calculates the replacement time of the aircraft tires in accordance with the remaining number of flights and the flight schedule. This improves the accuracy of calculating the replacement time accordingly.

While the present embodiment has been illustrated above with the case in which the traveling information of the aircraft includes the flight schedule, the flight schedule may be either a future flight schedule or a past flight schedule. The tire management apparatus 10, if cannot acquire the future flight schedule, may predict the future flight schedule based on the past flight schedule.

The present embodiment has been illustrated above with the case in which the replacement time is one day, but is not limited to this case. The replacement time may include several days. When an average number of the aircraft tires to be replaced for three days exceeds a threshold, for example, the tire management apparatus 10 may propose the change of the replacement time. In particular, the average number of the aircraft tires to be replaced for three days from January 3 to January 5 (27 aircraft tires) exceeds the threshold (20 aircraft tires), as shown in Fig. 4A, and the tire management apparatus 10 may propose the change of the replacement time in such a case.

The present embodiment has been illustrated above with the case in which the tire management apparatus 10 predicts the remaining tread amount by use of the predicted abrasion amount, but is not limited to this case. The remaining tread amount may be obtained by measurement.

While the present invention has been described above by reference to the embodiment, it should be understood that the present invention is not intended to be limited to the descriptions and the drawings composing part of this disclosure. Various alternative embodiments, examples, and technical applications will be apparent to those skilled in the art according to this disclosure.

For example, the tire management apparatus 10 has been illustrated with the case of acquiring the information of the aircraft from the airline 30, but is not limited to this case. The tire management apparatus 10 may acquire the information of the aircraft from any other source instead of the airline 30.

This example has been illustrated above with the case of calculating the number of the aircraft tires to be replaced at the replacement time for each size of the aircraft tires (the size is one type in the example shown in Fig. 2), but is not limited to this case. The number of the aircraft tires to be replaced at the replacement time may be the number of the aircraft tires in total in optional sizes. When the information on the remaining number of the aircraft tires in the stock is used as the threshold, the replacement time is preferably calculated per tire size so as to notify the particular notification target of the information.

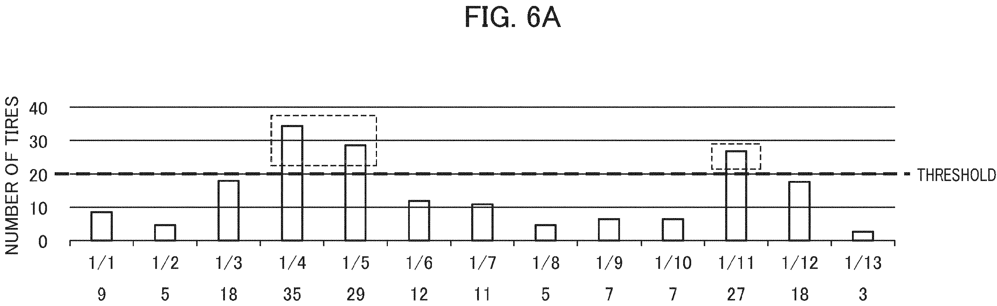

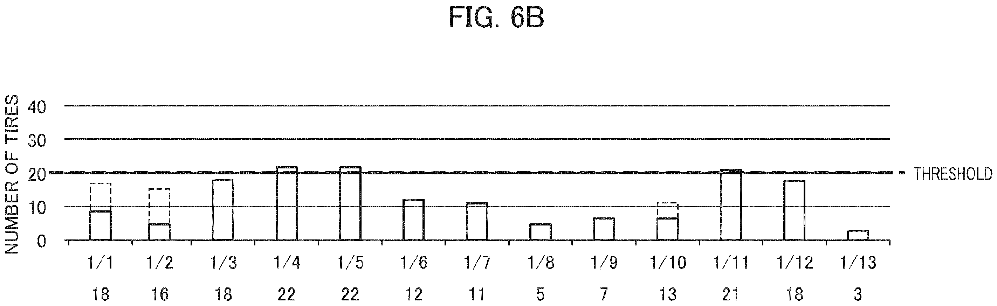

This example has been illustrated above with the case in which the notification unit 15 proposes the change of the replacement time of all of the aircraft tires that exceed the threshold, as shown in Fig. 4A and Fig. 4B, but is not limited to this case. For example, the notification unit 15 may propose the change of the replacement time of at least part of the aircraft tires that exceed the threshold. In particular, as shown in Fig. 6A, the notification unit 15 may propose the change of the replacement time of at least part of the aircraft tires that exceed the threshold (13 aircraft tires on January 4, 7 aircraft tires on January 5, and 6 aircraft tires on January 11). This enables the acceleration of the replacement time of at least part of the aircraft tires that exceed the threshold (20 aircraft tires in total on January 4 and January 5) so as to execute the replacement on January 2 and January 3, as shown in Fig. 6B. Similarly, as shown in Fig. 6B, the replacement time of at least part of the aircraft tires that exceed the threshold (6 aircraft tires on January 11) can be changed to be earlier so as to be executed on January 10. This can avoid the concentration of the aircraft tires to be replaced on a specific replacement time, so as to execute the replacement operation smoothly.

The wheels can be replaced simultaneously together with the aircraft tires. The threshold thus may be set in view of the number of wheels to be replaced. When the number of the aircraft tires and the wheels to be replaced exceeds a threshold, the notification unit 15 may notify the particular notification target of this information. This enables the planning for the operation of replacing the aircraft tires and the wheels that is a non-planning operation.

### REFERENCE SIGNS LIST

- 1: TIRE MANAGEMENT SYSTEM
- 10: TIRE MANAGEMENT APPARATUS
- 11: COMMUNICATION UNIT
- 12: REMAINING TREAD AMOUNT ACQUISITION UNIT
- 13: TRAVELING INFORMATION ACQUISITION UNIT
- 14: REPLACEMENT TIME CALCULATION UNIT
- 15: NOTIFICATION UNIT
- 20: NETWORK
- 30: AIRLINE
- 31: AIRCRAFT TIRE

## Claims

1. A tire management apparatus (10) configured to manage tires attached to a plurality of moving objects, the apparatus comprising:
a remaining tread amount acquisition unit (12) configured to acquire a remaining tread amount of the tires;
a traveling information acquisition unit (13) configured to acquire traveling information of the moving objects to which the tires are attached;
a replacement time calculation unit (14) configured to calculate a replacement time of the tires in accordance with the remaining tread amount and the traveling information; and
a notification unit (15) configured to notify a particular notification target of a proposal to change the replacement time of at least part of a number of the tires to a time where there is sufficient time to execute replacing operation, when a predetermined number of the tires or greater needs to be replaced simultaneously at a same replacement time.

2. The tire management apparatus (10) according to claim 1, wherein the predetermined number of tires is information on a remaining number of tires in a stock at the replacement time.

3. The tire management apparatus (10) according to claim 1, wherein the notification unit (15) proposes an acceleration of the replacement time.

4. The tire management apparatus (10) according to any one of claims 1 to 3, wherein the remaining tread amount acquisition unit (12) calculates the remaining tread amount of the tires in accordance with a remaining tread amount of new tires and a predicted abrasion amount.

5. The tire management apparatus (10) according to any one of claims 1 to 4, wherein:
the tires are aircraft tires attached to an aircraft;
the traveling information includes a flight schedule of the aircraft; and
the replacement time calculation unit (14) calculates a remaining number of flights that the aircraft can take in accordance with the remaining tread amount, and calculates the replacement time of the tires in accordance with the calculated remaining number of the flights and the flight schedule.

6. A tire management method of managing tires attached to a plurality of moving objects, the method comprising:
acquiring a remaining tread amount of the tires;
acquiring traveling information of the moving objects to which the tires are attached;
calculating a replacement time of the tires in accordance with the remaining tread amount and the traveling information; and
notifying a particular notification target of a proposal to change the replacement time of at least part of a number of the tires to a time where there is sufficient time to execute replacing operation, when a predetermined number of the tires or greater needs to be replaced simultaneously at a same replacement time.

7. A non-transitory computer-readable storage medium storing a tire management program for managing tires attached to a plurality of moving objects, the program causing a computer to execute the steps of:
acquiring a remaining tread amount of the tires;
acquiring traveling information of the moving objects to which the tires are attached;
calculating a replacement time of the tires in accordance with the remaining tread amount and the traveling information; and
notifying a particular notification target of a proposal to change the replacement time of at least part of a number of the tires to a time where there is sufficient time to execute replacing operation, when a predetermined number of the tires or greater needs to be replaced simultaneously at a same replacement time.

## Patentansprüche

1. Reifenverwaltungseinrichtung (10) die für Verwaltung von Reifen konfiguriert ist, die an einer Vielzahl von sich bewegenden Objekten befestigt sind, wobei die Einrichtung Folgendes umfasst:
eine Einheit (12) zur Erfassung der verbleibenden Profiltiefe, die so konfiguriert ist, dass sie eine verbleibende Profiltiefe der Reifen erfasst;
eine Einheit (13) zur Erfassung von Reiseinformationen, die so konfiguriert ist, dass sie Reiseinformationen für die sich bewegenden Objekte erfasst, an denen die Reifen befestigt sind;
eine Einheit (14) zur Berechnung des Wechselzeitpunkts, die so konfiguriert ist, dass sie den Zeitpunkt für den Wechsel der Reifen unter Berücksichtigung der verbleibenden Profiltiefe und der Reiseinformationen berechnet; und
eine Benachrichtigungseinheit (15), die so konfiguriert ist, dass sie ein bestimmtes Benachrichtigungsziel über einen Vorschlag benachrichtigt, den Wechselzeitpunkt für mindestens einen Teil einer Anzahl der Reifen auf einen Zeitpunkt zu verschieben, zu dem ausreichend Zeit für die Durchführung des Wechselvorgangs vorhanden ist, wenn eine vorbestimmte Anzahl von Reifen oder mehr gleichzeitig zum gleichen Wechselzeitpunkt gewechselt werden muss.

2. Reifenverwaltungseinrichtung (10) nach Anspruch 1, wobei die vorbestimmte Anzahl von Reifen eine Information über eine verbleibende Anzahl von Reifen in einem Lagerbestand zum Zeitpunkt des Wechsels ist.

3. Reifenverwaltungseinrichtung (10) nach Anspruch 1, wobei die Benachrichtigungseinheit (15) eine Vorverlegung des Wechselzeitpunkts vorschlägt.

4. Reifenverwaltungseinrichtung (10) nach einem der Ansprüche 1 bis 3, wobei die Einheit (12) zur Erfassung der verbleibenden Profiltiefe die verbleibende Profiltiefe der Reifen unter Berücksichtigung einer verbleibenden Profiltiefe neuer Reifen und eines vorhergesagten Abriebmaßes berechnet.

5. Reifenverwaltungseinrichtung (10) nach einem der Ansprüche 1 bis 4, wobei:
die Reifen Flugzeugreifen sind, die an einem Flugzeug befestigt sind;
die Reiseinformationen einen Flugplan des Flugzeugs einschließen; und
die Einheit (14) zur Berechnung des Wechselzeitpunkts eine verbleibende Anzahl der Flüge berechnet, die das Flugzeug unter Berücksichtigung der verbleibenden Profiltiefe absolvieren kann, und den Wechselzeitpunkt der Reifen unter Berücksichtigung der berechneten verbleibenden Anzahl der Flüge und des Flugplans berechnet.

6. Reifenverwaltungsverfahren zur Verwaltung von Reifen, die an einer Vielzahl von sich bewegenden Objekten befestigt sind, wobei das Verfahren Folgendes umfasst:
Erfassen einer verbleibenden Profiltiefe der Reifen;
Erfassen von Reiseinformationen der sich bewegenden Objekte, an denen die Reifen befestigt sind;
Berechnen des Zeitpunkts für den Wechsel der Reifen unter Berücksichtigung der verbleibenden Profiltiefe und den Reiseinformationen; und
Benachrichtigen eines bestimmten Benachrichtigungsziels über einen Vorschlag, den Wechselzeitpunkt für mindestens einen Teil einer Anzahl der Reifen auf einen Zeitpunkt zu verschieben, zu dem ausreichend Zeit für die Ausführung des Wechselvorgangs vorhanden ist, wenn eine vorbestimmte Anzahl von Reifen oder mehr gleichzeitig zum gleichen Wechselzeitpunkt gewechselt werden muss.

7. Nichtflüchtiges, computerlesbares Speicherungsmedium, das ein Reifenverwaltungsprogramm zur Verwaltung von Reifen speichert, die an einer Vielzahl von sich bewegenden Objekten befestigt sind, wobei das Programm einen Computer veranlasst, die folgenden Schritte auszuführen:
Erfassen einer verbleibenden Profiltiefe der Reifen;
Erfassen von Reiseinformationen der sich bewegenden Objekte, an denen die Reifen befestigt sind;
Berechnen des Zeitpunkts für den Wechsel der Reifen unter Berücksichtigung der verbleibenden Profiltiefe und den Reiseinformationen; und
Benachrichtigen eines bestimmten Benachrichtigungsziels über einen Vorschlag, den Wechselzeitpunkt für mindestens einen Teil einer Anzahl der Reifen auf einen Zeitpunkt zu verschieben, zu dem ausreichend Zeit für die Ausführung des Wechselvorgangs vorhanden ist, wenn eine vorbestimmte Anzahl von Reifen oder mehr gleichzeitig zum gleichen Wechselzeitpunkt gewechselt werden muss.

## Revendications

1. Appareil de gestion de pneu (10) configuré pour gérer des pneus fixés à une pluralité d'objets mobiles, l'appareil comprenant :
une unité d'acquisition de quantité de bande de roulement restante (12) configurée pour acquérir une quantité de bande de roulement restante des pneus ;
une unité d'acquisition d'informations de déplacement (13) configurée pour acquérir des informations de déplacement des objets mobiles auxquels les pneus sont fixés ;
une unité de calcul du temps de remplacement (14) configurée pour calculer le temps de remplacement des pneus en fonction de la quantité de bande de roulement restante et des informations de voyage ; et
une unité de notification (15) configurée pour notifier une cible de notification particulière d'une proposition visant à modifier le temps de remplacement d'au moins une partie d'un certain nombre de pneus à un moment où il y a suffisamment de temps pour exécuter l'opération de remplacement, lorsqu'un nombre prédéterminé de pneus ou plus doit être remplacé simultanément au même moment de remplacement.

2. Appareil de gestion de pneu (10) selon la revendication 1, dans lequel le nombre prédéterminé de pneus est une information sur le nombre de pneus restants dans un stock au moment du remplacement.

3. Appareil de gestion de pneu (10) selon la revendication 1, dans lequel l'unité de notification (15) propose une accélération du temps de remplacement.

4. Appareil de gestion de pneu (10) selon l'une quelconque des revendications 1 à 3, dans lequel l'unité d'acquisition de la quantité de bande de roulement restante (12) calcule la quantité de bande de roulement restante des pneus conformément à une quantité de bande de roulement restante de pneus neufs et à une quantité d'abrasion prévue.

5. Appareil de gestion de pneu (10) selon l'une quelconque des revendications 1 à 4, dans lequel :
les pneus sont des pneus d'avion fixés à un avion ;
les informations relatives au voyage incluent l'horaire de vol de l'appareil ; et
l'unité de calcul du temps de remplacement (14) calcule le nombre de vols restants que l'avion peut effectuer en fonction de la quantité de bande de roulement restante, et calcule le temps de remplacement des pneus en fonction du nombre de vols restants calculé et du programme de vol.

6. Procédé de gestion de pneus pour la gestion de pneus fixés à une pluralité d'objets mobiles, le procédé comprenant :
l'acquisition de la quantité de bande de roulement restante des pneus ;
l'acquisition d'informations sur le déplacement des objets mobiles auxquels les pneus sont fixés ;
le calcul de la date de remplacement des pneus en fonction de la profondeur de bande de roulement restante et des informations relatives au trajet ; et
la notification à une cible de notification particulière d'une proposition visant à modifier le temps de remplacement d'au moins une partie d'un certain nombre de pneus à un moment où il y a suffisamment de temps pour exécuter l'opération de remplacement, lorsqu'un nombre prédéterminé de pneus ou plus doit être remplacé simultanément au même moment de remplacement.

7. Support de stockage non transitoire lisible par ordinateur contenant un programme de gestion de pneus destiné à gérer des pneus fixés à plusieurs objets mobiles, le programme amenant un ordinateur à exécuter les étapes de :
acquisition de la quantité de bande de roulement restante des pneus ;
acquisition d'informations sur le déplacement des objets mobiles auxquels les pneus sont fixés ;
calcul de la date de remplacement des pneus en fonction de la profondeur de bande de roulement restante et des informations relatives au trajet ; et
notification à une cible de notification particulière d'une proposition visant à modifier le temps de remplacement d'au moins une partie d'un certain nombre de pneus à un moment où il y a suffisamment de temps pour exécuter l'opération de remplacement, lorsqu'un nombre prédéterminé de pneus ou plus doit être remplacé simultanément au même moment de remplacement.
